# EUROPEAN PATENT APPLICATION

(11) **EP 4 694 493 A1**
(43) Date of publication of application: **11.02.2026**
(21) Application number: 23929196.6
(22) Date of filing: 28.03.2023
(51) Int. Cl.: H04W 72/25

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: RGTH
(86) International application number: PCT/CN2023/084501
(87) International publication number: WO 2024/197597

(57) **Abstract**

Provided are a communication method and a communication apparatus. The method comprises: a first terminal device sending first information to a second terminal device, wherein the first information is used for requesting the second terminal device to serve as another user equipment (UE) that executes a first sensing task. The method in the embodiments of the present application is helpful to assist the realization of a sensing task by means of a second terminal device.

## Description

### TECHNICAL FIELD

The present disclosure relates to the field of communication technology, and in particular to, a communication method and a communication apparatus.

### BACKGROUND

In some communication systems, in a case where a sensing task is performed on a target user equipment (UE) in a sidelink (SL), it may be assisted via another UE. However, it is still unclear how to achieve the sensing task with the assistance of the another UE.

### SUMMARY

Embodiments of the present disclosure provide a communication method and a communication apparatus. Various aspects of the embodiments of the present disclosure are introduced below.

In a first aspect, a communication method is provided, which includes: transmitting, by a first terminal device, first information to a second terminal device, where the first information is used for requesting the second terminal device to serve as another user equipment (UE) performing a first sensing task.

In a second aspect, a communication method is provided, which includes: receiving, by a second terminal device, first information transmitted from a first terminal device, where the first information is used for requesting the second terminal device to serve as another user equipment (UE) performing a first sensing task.

In a third aspect, a communication method is provided, which includes: transmitting, by a first network element, second information to a first terminal device, where the second information is used for indicating to the first terminal device to discover another user equipment (UE) capable of performing a first sensing task.

In a fourth aspect, a communication apparatus is provided, which includes: a transmitting unit, configured to transmit first information to a second terminal device, where the first information is used for requesting the second terminal device to serve as another user equipment (UE) performing a first sensing task.

In a fifth aspect, a communication apparatus is provided, which includes: a receiving unit, configured to receive first information transmitted from a first terminal device, where the first information is used for requesting the apparatus to serve as another user equipment (UE) performing a first sensing task.

In a sixth aspect, a communication apparatus is provided, which includes: a transmitting unit, configured to transmit second information to a first terminal device, where the second information is used for indicating to the first terminal device to discover another user equipment (UE) capable of performing a first sensing task.

In the seventh aspect, a communication apparatus is provided, which includes a memory, a transceiver and a processor, where the memory is configured to store a program, the processor receives data and transmits data via the transceiver, and the processor is configured to call the program in the memory, to enable the communication apparatus to perform the method according to any one of the first aspect to the third aspect.

In an eighth aspect, a communication apparatus is provided, which includes a processor, configured to call a program from a memory, to enable the communication apparatus to perform the method according to any one of the first aspect to the third aspect.

In a ninth aspect, a chip is provided, which includes a processor, configured to call a program from a memory, to enable a device equipped with the chip to perform the method according to any one of the first aspect to the third aspect.

In a tenth aspect, a computer-readable storage medium is provided, where a program is stored thereon, and the program enables a computer to perform the method according to any one of the first aspect to the third aspect.

In an eleventh aspect, a computer program product is provided, which includes a program, where the program enables a computer to perform the method according to any one of the first aspect to the third aspect.

In a twelfth aspect, a computer program is provided, where the computer program enables a computer to perform the method according to any one of the first aspect to the third aspect.

In the embodiments of the present disclosure, the first terminal device transmits the first information to the second terminal device, which facilitates using the second terminal device as another UE performing the first sensing task, so as to facilitate achieving the sensing task with the assistance of the second terminal device.

### BRIEF DESCRIPTION OF THE DRAWINGS

FIG. 1 is an example diagram of a wireless communication system to which embodiments of the present disclosure are applicable.
FIG. 2 is a schematic diagram of a 5G system architecture.
FIG. 3 is a schematic flowchart of UE-level sensing in an embodiment.
FIG. 4 is a schematic diagram of a sidelink UE discovery and selection model in an embodiment.
FIG. 5 is a schematic diagram of a sidelink UE discovery and selection model in another embodiment.
FIG. 6 is a schematic flowchart of a communication method provided in an embodiment of the present disclosure.
FIG. 7 is a schematic flowchart of a communication method provided in another embodiment of the present disclosure.
FIG. 8 is a schematic flowchart of a communication method provided in yet another embodiment of the present disclosure.
FIG. 9 is a schematic flowchart of a communication method provided in still yet another embodiment of the present disclosure.
FIG. 10 is a schematic structural diagram of a communication apparatus provided in an embodiment of the present disclosure.
FIG. 11 is a schematic structural diagram of a communication apparatus provided in another embodiment of the present disclosure.
FIG. 12 is a schematic structural diagram of a communication apparatus provided in yet another embodiment of the present disclosure.
FIG. 13 is a schematic structural diagram of an apparatus provided in an embodiment of the present disclosure.

### DETAILED DESCRIPTION

The technical solution in the present disclosure will be described below in conjunction with the accompanying drawings.

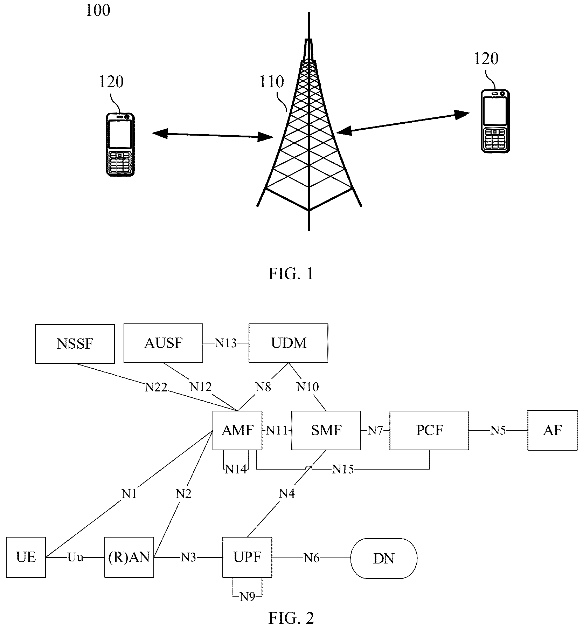

FIG. 1 illustrates a wireless communication system 100 to which the embodiments of the present disclosure are applicable. The wireless communication system 100 may include a network device 110 and a user equipment (UE) 120. The network device 110 may communicate with the UE 120. The network device 110 may provide communication coverage for a specific geographical area and may communicate with the UE 120 located within the coverage area. The UE 120 may access a network (e.g., a wireless network) via the network device 110.

FIG. 1 exemplarily illustrates one network device and two UEs. Optionally, the wireless communication system 100 may include a plurality of network devices, and there may be another number of terminal devices within the coverage area of each network device, which is not limited in the embodiments of the present disclosure. Optionally, the wireless communication system 100 may further include other network entities such as a network controller and a mobility management entity, which are not limited in the embodiments of the present disclosure.

It should be understood that the technical solutions of the embodiments of the present disclosure may be applied to various communication systems, such as a 5th generation (5G) system or new radio (NR), a long-term evolution (LTE) system, an LTE frequency division duplex (FDD) system, and LTE time division duplex (TDD). The technical solutions provided in the present disclosure may further be applied to future communication systems, such as a 6th generation mobile communication system, or a satellite communication system.

The UE in the embodiments of the present disclosure may also be referred to as a terminal device, an access terminal, a user unit, a user station, a mobile platform, a mobile station (MS), a mobile terminal (MT), a remote station, a remote terminal, a mobile device, a user terminal, a terminal, a wireless communication device, a user agent, or a user apparatus. The UE in the embodiments of the present disclosure may refer to a device that provides voice and/or data connectivity to a user, which may be used to connect people, objects, and machines, such as a handheld device or in-vehicle device with wireless connection functions. The UE in the embodiments of the present disclosure may be a mobile phone, a pad, a laptop computer, a handheld computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, or the like. Optionally, the UE may be configured to act as a base station. For example, the UE may act as a scheduling entity that provides sidelink signals between UEs in V2X or D2D. For example, a cellular phone and a car communicate with each other using sidelink signals. The cellular phone and a smart home device communicate with each other without relaying communication signals via the base station.

The network device in the embodiments of the present disclosure may be a device for communicating with the UE, and the network device may also be referred to as an access network device or a wireless access network device. For example, the network device may be a base station. The network device in the embodiments of the present disclosure may refer to a radio access network (RAN) node (or device) that accesses the UE to a wireless network. The base station may be generalized to cover the following various names, or be substituted with the following names, such as: NodeB, evolved base station (evolved NodeB, eNB), next generation base station (next generation NodeB, gNB), relay station, access point, transmitting and receiving point (TRP), transmitting point (TP), master station MeNB, secondary station (SeNB), multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), and positioning node. The base station may be a macro base station, a micro base station, a relay node, a donor node, or an analogue or combination thereof.

In some embodiments, the network device may be fixed or mobile. For example, a helicopter or drone may be configured to act as a mobile network device, and one or more cells may move based on the location of the mobile network device. In other examples, the helicopter or drone may be configured to function as a device for communicating with another network device. In some embodiments, the network device may refer to a CU or a DU, or the network device may include a CU and a DU, or the network device may further include an AAU.

It should be understood that network device may be deployed on land, including indoors or outdoors, handheld or in-vehicle; the network device may also be deployed on water; and the network device can also be deployed on aircraft, balloons and satellites in the air. The scenarios in which the network device is located are not limited in the embodiments of the present disclosure.

It should also be understood that all or part of the functions of the network device and UE in the present disclosure may also be implemented by software functions running on hardware, or by virtualization functions instantiated on a platform (e.g., a cloud platform).

FIG. 2 is a 5G system architecture diagram, which includes: a network slice selection function (NSSF), an authentication server function (AUSF), an unified data management (UDM), an access and mobility management function (AMF), an session management function (SMF), a policy control function (PCF), an application function (AF), a UE, a radio access network (RAN) network element, a user plane function (UPF) network element, a data network (DN) and other network elements.

As illustrated in FIG. 2, the UE may establish an access stratum connection with the access network (AN) via a Uu interface, to exchange access layer messages and transmit wireless data. The UE may establish a non-access stratum (NAS) connection with the AMF via an N1 interface, to exchange NAS messages. The AMF is a mobility management function in the core network, and the SMF is a session management function in the core network. In addition to managing mobility of the UE, the AMF is further responsible for forwarding session management related messages between the UE and the SMF. The PCF is a policy management function in the core network, and responsible for formulating policies related to mobility management, session management, and billing of the UE. The UPF is a user plane function in the core network, where the UPF may transmit data with external data networks via an N6 interface, and may transmit data with the AN via an N3 interface.

Existing cellular networks, including 5G networks, are generally used for communications only. But in fact, radio electromagnetic wave signals used by the cellular networks may not only be used for wireless data transmission and communication, but also have environmental sensing capabilities. For example, the radio electromagnetic wave signals may sense actions of a user, gesture recognition, breathing monitoring, terminal movement speed measurement, environmental imaging, weather monitoring, or the like. Therefore, in the cellular networks, the radio electromagnetic wave signals may be used not only for the communication and the data transmission, but also for obtaining sensing information.

Currently, discussions are underway to support sensing functions (e.g., integrated sensing and communication) in beyond 5G (B5G) networks, and to support sensing functions in 3rd generation partnership project (3GPP) networks by adding a sensing control network element (a sensing function, SF) and the corresponding process.

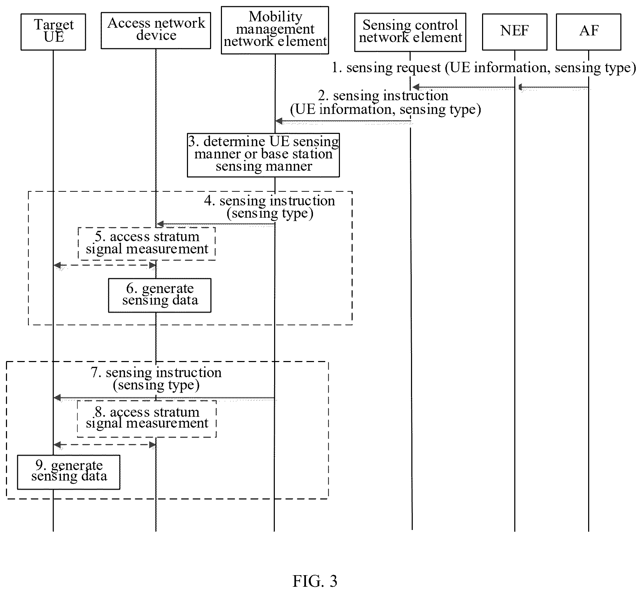

FIG. 3 is a flowchart of a possible control method for an access network device or a UE to perform a UE-level (per-UE) sensing operation. For example, as illustrated in FIG. 3, in a case where an application (e.g., an AF) transmits a sensing request for a target UE to the core network of the 3GPP network (e.g., a network exposure function (NEF)), the core network may select a correct access network device or another UE via the sensing control network element or a mobility management network element (e.g., the AMF), and transmit a sensing instruction to the access network device (e.g., step 4 in FIG. 3) or the target UE (e.g., step 7 in FIG. 3), to trigger ability of the access network device or the target UE to perform wireless measurements related to the sensing task, start measurement of sensing information (e.g., steps 5 and 8 in FIG. 3) and generate a sensing result (e.g., steps 6 and 9 in FIG. 3).

Main wireless sensing scenarios of the integrated sensing and communication (which may referred to as ISAC for short) are as follows:
1) base station echo sensing link (single gNB sensing): a base station transmitting a sensing signal and receiving an echo signal;
2) inter-base station sensing link (gNB-gNB sensing): a base station B receiving a sensing signal transmitted from a base station A;
3) air interface uplink sensing link (UE-gNB uplink sensing): a base station receiving a sensing signal transmitted from a terminal;
4) air interface downlink sensing link (UE-gNB downlink sensing): a terminal receiving a sensing signal transmitted from a base station;
5) terminal echo sensing link (single UE sensing): a terminal transmitting a sensing signal and receiving an echo signal; and
6) inter-terminal sensing link (UE-UE sensing): a terminal B receiving a sensing signal transmitted from a terminal A.

In early stages of the integrated sensing and communication of the B5G, existing air interface signals are considered as much as possible to be reused, to perform sensing operations without introducing too much air interface enhancement; and complexity of full-duplex implementation are considered, to enable collaborative sensing between terminal devices and/or base stations to be a priority.

For UE-level sensing, a sensing target is generally a certain UE or objects and environments around the UE. Because it is difficult to implement full-duplex autonomous transmission and reception of the UE, other UE nodes may be required to assist in one-transmission and one-reception sensing tasks.

It may be seen from the above embodiments that in a case where a sensing task is performed on a target user equipment (UE) in a sidelink (SL), another UE may be required for performing assistance.

In the sidelink, the UE may discover (and select) other SL UE nodes (sidelink UE discovery and selection) via various manners. Two common models will be introduced as follows.

Model for model A discovery ("I am here").

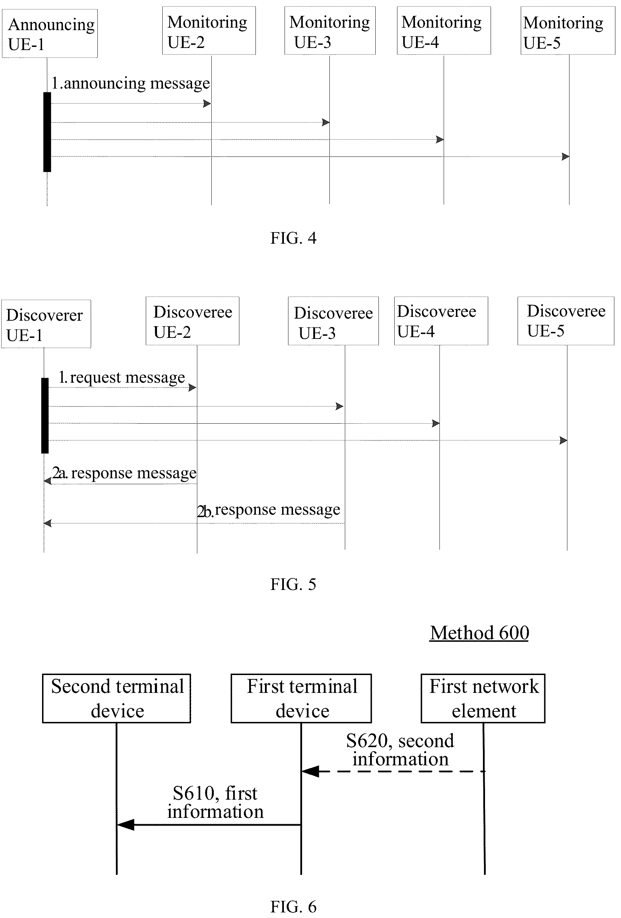

The model defines two roles for UEs participating in discovery: (1) Announcing UE, which may announce certain information (e.g., the certain information may be carried in an announcing message illustrated in FIG. 4), which may be used by nearby UEs with discovery permissions; (2) Monitoring UE, which monitors certain information of interest around the announcing UE.

In this model, the announcing UE may broadcast an announcing message at a predefined discovery interval, and the monitoring UE interested in the announcing message may read and process the discovery message. This model is equivalent to "I am here" in that the announcing UE may broadcast information about itself.

Model for model B discovery ("Who's there?"/ "Are you there?").

The model defines two roles for UEs participating in discovery: (1) Discoverer UE, which may transmit a request message including certain information about what it is interested in discovering; (2) Discoveree UE, which is a UE that receives the request message may respond with some information related to the request message transmitted from the discoverer UE.

It is equivalent to "who's there/are you there" because the discoverer UE transmits information that it expects to receive a response from another UE. The information may be a proximity services (ProSe) application identifier corresponding to a group, to which members of the group may respond.

It may be seen that currently in the sidelink, the target UE may discover another SL UE via various manners, but it is not clear how to achieve the sensing task with the assistance of another UE. Therefore, how to achieve the sensing task with the assistance of another UE has become a technical problem that needs to be solved urgently.

Moreover, the above sidelink UE discovery and selection model is only applicable to the discoverer UE obtaining information of the discoveree UE (or the announcing UE obtaining information of the monitoring UE), but for execution of a final sensing task, both the discoverer UE and the discoveree UE are required to establish a connection with the network (e.g., the SF in FIG. 3), and information of the discoveree UE obtained by the discoverer UE via the sidelink general does not include a subscription permanent identifier (SUPI) and other UE identifier (ID) information that may be recognized by the core network. Even if the information is reported to the network, the network may not be able to find the corresponding UE, and cannot interact with the sensing task. Therefore, how to enable another UE in the sensing task to establish a connection with the network is further a technical problem that needs to be solved.

In order to solve one or more of the above technical problems, the present disclosure proposes a communication method and a communication apparatus. The embodiments of the present disclosure are described in detail below with reference to FIGS. 6 to 9.

FIG. 6 is an illustrative flowchart of a communication method provided in the embodiments of the present disclosure. The method 600 illustrated in FIG. 6 may include steps S610 and S620, which are specifically as follows.

In S610, a first terminal device transmits first information to a second terminal device.

Here, the first information may be used for requesting the second terminal device to serve as another UE performing the first sensing task. Optionally, the first sensing task may be a sensing task for the first terminal device. Optionally, the another UE may refer to another SL UE that assists the first terminal device to perform the first sensing task. The another UE may also be referred to as an assistant UE.

Optionally, the first information may include one or more of: identifier information of the first sensing task, identifier information of a sensing request, a sensing type, a quality requirement of sensing, or identifier information of a first network element.

Here, the identifier information of the sensing request may be identifier information corresponding to following second information.

The sensing type may include one or more of: intrusion monitoring, target positioning, motion capture, speed prediction, trajectory prediction, or reporting of channel processing information (e.g., location information, Doppler frequency shift information, point cloud information).

The quality requirement of sensing may include information such as sensing accuracy information, reporting frequency, and false alarm rate.

The first network element may be a network element used for a sensing service. For example, the first network element may be a newly added network element, such as a sensing control network element (sensing function, SF) newly added to a 5G system; alternatively, the first network element may be an existing network element, such as LMF (location management function), AMF. The identifier information of the first network element may include device identifier (ID) information of the first network element, instance information of the first network element within a system (e.g., the 5G system), and/or address information of the first network element.

Optionally, the first information may further include identifier (ID) information of the first terminal device.

Optionally, the first information may be carried in a sensing request message. The sensing request message may be an announcement message or a solicitation message transmitted via a PC5 interface in the SL, or may be other messages (such as a newly defined sensing request message).

Optionally, the first information may be transmitted from the first terminal device to one or more terminal devices around the first terminal device (the second terminal device may be one of the one or more terminal devices). Optionally, the first information may be transmitted in a multicast manner or a broadcast manner.

For example, the first terminal device may first discover another SL UE via the model for model A discovery or the model for model B discovery, and then transmit the first information to the another discoveree SL UE via the sensing request message.

As another example, the first terminal device may transmit the first information to terminal devices around the first information by directly using the sensing request message. Optionally, in this case, the sensing request message may include meaning of both discovering another SL UE and requesting another UE performing the first sensing task to perform sensing.

In the embodiments of the present disclosure, the first terminal device transmits the first information to the second terminal device, which facilitates using the second terminal device as another UE performing the first sensing task, so as to facilitate achieving the sensing task with the assistance of the second terminal device.

In some embodiments, before performing S610, the method 600 may include step S620, which is as follows.

In S620, a first network element transmits second information to a first terminal device.

The second information may be used for indicating to the first terminal device to discover another UE capable of performing the first sensing task.

Optionally, the second information may include one or more of: first indication information, identifier information of the first sensing task, identifier information of a sensing request, a sensing manner, a sensing type, a quality requirement of sensing, or identifier information of a first network element. Here, the first indication information may indicate that the first terminal device discovers another UE used for performing the first sensing task.

In the present disclosure, the second information may be discovered via various manners, which are specifically as follows.

In some embodiments, the second information may be indicated in an explicit manner. For example, the second information itself may be request information used for requesting the first terminal device to discover another UE used for performing the first sensing task; alternatively, the second information may include request information, such as the above first indication information.

In some embodiments, the second information may be indicated in an implicit manner. For example, in a case where the second information includes one or more of: the identifier information of the first sensing task, the identifier information of the sensing request, the sensing manner, the sensing type, the quality requirement of sensing, or the identifier information of the first network element, the second information may indicate a request for the first terminal device to discover another UE used for performing the first sensing task. Here, the sensing manner may include an indication of a manner in which the first terminal device performs transmission and another UE (e.g., the second terminal device) performs reception, and may also include an indication of another UE as a transmitter or a receiver.

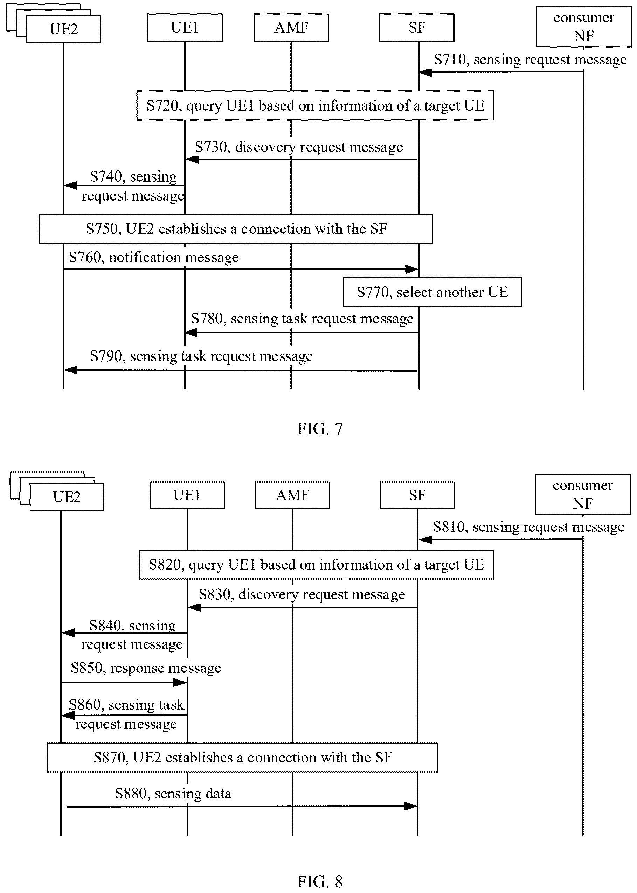

In the present disclosure, a connection between another UE and the network may be established via various methods, which are respectively described below in conjunction with FIGS. 7 to 9 (the first network element in FIGS. 7 to 9 takes the SF as an example).

Method 1: the first terminal device transmits identifier information of the first network element to the second terminal device. After receiving the first information, the second terminal device actively establishes a connection with the first network element based on the identifier information of the first network element. The method 1 is specifically described as follows.

The first terminal device may transmit the first information to the second terminal device corresponding to the first terminal device. Optionally, the first information may include identifier information of the first network element.

Optionally, the second terminal device may actively establish a connection with the first network element according to the first information.

Optionally, after establishing a connection with the first network element, the second terminal device may interact with the first network element. For example, the second terminal device may transmit sixth information to the first network element.

Optionally, the sixth information may be used for indicating that the second terminal device is capable of performing the first sensing task. Optionally, the sixth information may include one or more of: identifier information of the first sensing task, identifier information of a sensing request, or identifier information of the first terminal device.

Optionally, the first network element may receive the sixth information transmitted from one or more terminal devices (the second terminal device may be one of the one or more terminal devices), and determine another UE for performing the first sensing task based on the received sixth information.

A specific implementation process of the method 1 is described below in conjunction with FIG. 7. In FIG. 7, after receiving a UE-level sensing request message and discovering UE1, the SF may transmit a discovery request message to UE1. UE1 may carry sensing manner information of a current sensing task and the identifier information of the SF in the sensing request message transmitted to UE2 around the UE1 itself. Subsequently, UE2 may establish a connection with the SF and notify the SF. In this case, the SF may make subsequent selections of another UE.

As illustrated in FIG. 7, the method 700 may include steps S710 to S790, which are specifically as follows.

In S710, a consumer NF transmits a sensing request message to the SF.

The consumer NF may be a core network element, such as the AMF, the NEF, or an application server, such as the AF, or the UE.

The sensing request message may include information of a target UE (e.g., ID information of the target UE), the sensing request may further include a requested sensing manner and/or a requested sensing service type, and the sensing request may further include quality information required for a sensing service, such as accuracy.

The information of the target UE may include one or more of:
a subscription permanent identifier (SUPI) of the target UE, subscription concealed identifier (SUCI) of the target UE, generic public subscription identifier (GPSI) of the target UE, or other information of the target UE; and
address information of the target UE (IP address, MAC address, or the like).

Optionally, the SF or other network elements (e.g., the NEF) may map the information of the target UE to convert the information of the target UE into ID information (e.g., the SUPI) that may be directly used for querying within the core network.

In S720, the SF queries UE1 based on the information of the target UE (UEl may be the first terminal device in the above embodiments).

Specifically, the SF may discover UE1 by querying other network elements, such as the AMF, an unified data repository (UDR), the UDM, or by querying local information.

In S730, the SF transmits a discovery request message to UE1.

The discovery request message may include the second information in the above embodiments.

The SF transmits the discovery request message to UE1 based on the sensing request message, which may include indication information for discovering the assistant UE. Optionally, the sensing request message may further include ID information of the sensing task/request, the sensing manner (such as a manner in which UE A performs transmission and UE B performs reception, specifically, the sensing request message may further include an indication of the assistant UE as a transmitter or a receiver), the sensing type, the quality requirement of sensing, or the like, and may further include SF ID information (e.g., device ID information of the SF, instance information within the 5GC, address information of the SF).

The sensing type may include intrusion monitoring, target positioning, motion capture, speed/trajectory prediction, or the like, and the sensing type may also be specific request report channel processing information (position information, Doppler frequency shift information, point cloud information, or the like). The quality requirement of sensing may include information, such as sensing accuracy information, reporting frequency, and false alarm rate.

In S740, UE1 transmits a sensing request message to UE2.

The sensing request message may include the first information in the above embodiments.

For example, after receiving the discovery request message transmitted from the SF, UE1 may transmit the sensing request message to UE2 around UE1 in an SL manner. The sensing request message may include ID information of the sensing task, ID information of the discovery request message (which is consistent with that transmitted from the SF), the sensing type, the quality requirement of sensing, or the like. The sensing request message may further include the ID information of the SF, and optionally, the sensing request message may further include ID information of UE1 itself.

Here, UE1 transmits the sensing request message to UE2 around UE1, and may reuse an announcement message or a solicitation message transmitted via the PC5 interface in the current SL, and add information carried by the sensing request message (e.g., the first information); UE1 may also first discover another SL UE via the model for model A discovery or the model for model B discovery, and then initiate a request to another discovered SL UE via the sensing request message; UE1 may also directly use a newly defined SL sensing request message to transmit the sensing request message, and the SL sensing request message may be different from the existing solicitation message, but may include meaning of both discovering the SL UE and requesting another UE to perform sensing. After receiving the message, UE2 around UE1 may simultaneously reply to UE1 with a response of discovering the SL UE and transmit a response of performing sensing as another UE to the SF.

In S750, UE2 establishes a connection with the SF.

After receiving the sensing request message transmitted from UE1, UE2 may determine that UE2 may perform the sensing task as another UE based on sensing capabilities of the UE2 itself and sensing requirement of the UE2 itself, and establish the connection with the SF via ID information of the SF. Specifically, a session may be established via user plane address information of the SF, or signaling interaction is performed via control plane signaling based on the ID information of the SF.

In S760, UE2 reports a notification message to the SF.

The notification message may include the sixth information in the above embodiments.

The notification message may carry the ID information of the sensing task and the ID information of the discovery request message (which is consistent with that transmitted from the SF in S730). Optionally, the notification message may further include the ID information of UE1 and the like.

In S770, the SF selects another UE that performs the sensing task.

The SF obtains information of multiple selectable UEs based on notification messages reported by multiple UE2s, and selects another UE.

In S780, the SF transmits a sensing task request message to UE1.

In S790, the SF transmits, to the selected UE2, a sensing task request message which may be different from the sensing request transmitted to UE1.

In the present disclosure, the sensing requirement and ID information of the SF are carried in the sensing request message transmitted from UE1 to UEs around the UE1, to enable the UEs around the UE1 know whether they may support the sensing task, and know how to establish a connection with the SF and report that they may complete the sensing task as another UE.

Method 2: the first terminal device selects the second terminal device as another UE performing the first sensing task, and transmits the identifier information of the first network element to the second terminal device, and the second terminal device actively connects to the first network element based to the identifier information of the first network element. The method 2 is specifically described as follows.

Optionally, after receiving the first information, the second terminal device may transmit third information to the first terminal device.

Optionally, the third information may be used for indicating that the second terminal device is capable of performing the first sensing task. Optionally, the third information may include sensing capability information of the second terminal device. Optionally, the sensing capability information may include information such as a sensing type supported by the second terminal device and sensing quality capabilities supported by the second terminal device.

Optionally, the first terminal device may determine, based on the third information, that the second terminal device is capable of serving as another UE performing the first sensing task.

Furthermore, the first terminal device may transmit fourth information to the second terminal device.

Optionally, the fourth information may be used for requesting the second terminal device to perform the first sensing task. Optionally, the fourth information may include one or more of: identifier information of the first sensing task, identifier information of a sensing request, a sensing type, a quality requirement of sensing, identifier information of a first network element, or identifier information of the first terminal device.

Optionally, after receiving the fourth information, the second terminal device may establish a connection with the first network element and interact with the first network element.

The specific implementation process of the method 2 is described below in conjunction with FIG. 8. In FIG. 8, after receiving a UE-level sensing request message and discovering UE1, the SF may transmit a discovery request message to UE1. UE1 may carry sensing manner information of a current sensing task in the sensing request message transmitted to UE2 around UE1 itself. After obtaining UE information of UE2, UE may select another UE and transmit sensing task request messages to the selected another UE. The another UE may establish a connection with the SF and directly report sensing data to the SF.

As illustrated in FIG. 8, the method 800 may include steps S810 to S880, which are specifically as follows.

In S810, a consumer NF transmits a sensing request message to the SF.

The consumer NF may be a core network element, such as the AMF, the NEF, or an application server, such as the AF, or the UE.

The sensing request message may include information of a target UE (e.g., ID information of the target UE), the sensing request message may further include a requested sensing manner and/or a requested sensing service type, and the sensing request message may further include quality information required for a sensing service, such as accuracy.

The information of the target UE may include one or more of:
a subscription permanent identifier (SUPI) of the target UE, subscription concealed identifier (SUCI) of the target UE, generic public subscription identifier (GPSI) of the target UE, or other information of the target UE; and
address information of the target UE (IP address, MAC address, or the like).

Optionally, the SF or other network elements (e.g., the NEF) may map the target UE information to convert the information of the target UE into ID information (e.g., the SUPI) that may be directly used for querying within the core network.

In S820, the SF queries UE1 based on the information of the target UE (UEl may be the first terminal device in the above embodiments).

Specifically, the SF may discover UE1 by querying other network elements, such as the AMF, an unified data repository (UDR), the UDM, or by querying local information.

In S830, the SF transmits a discovery request message to UE1.

The discovery request message may include the second information in the above embodiments.

The SF transmits the discovery request message to UE1 based on the sensing request message, which may include indication information for discovering the assistant UE. Optionally, the sensing request message may further include ID information of the sensing task/request, the sensing manner (such as a manner which UE A performs transmission and UE B performs reception, specifically, the sensing request message may further include an indication of the assistant UE as a transmitter or a receiver), the sensing type, the quality requirement of sensing, or the like, and may further include SF ID information (e.g., device ID information of the SF, instance information within the 5GC, address information of the SF).

The sensing type may include intrusion monitoring, target positioning, motion capture, speed/trajectory prediction, or the like, and the sensing type may also be specific request report channel processing information (position information, Doppler frequency shift information, point cloud information, or the like). The quality requirement of sensing may include information, such as sensing accuracy information, reporting frequency, and false alarm rate.

In S840, UE1 transmits a sensing request message to UE2.

The sensing request message may include the first information in the above embodiments.

For example, after receiving the discovery request message transmitted from the SF, UE1 may transmit the sensing request message to UE2 around UE1 in an SL manner. The sensing request message may include the sensing type, the quality requirement of sensing, or the like.

Here, UE1 transmits the sensing request message to UE2 around UE1, and may reuse an announcement message or a solicitation message transmitted via the PC5 interface in the current SL, and add information carried by the sensing request message (e.g., the first information); UE1 may also first discover another SL UE via the model for model A discover or the model for model B discovery, and then initiate a request to another discovered SL UE via the sensing request message; UE1 may also directly use a newly defined SL sensing request message to transmit the sensing request message, and the SL sensing request message may be different from the existing solicitation message, but may include meaning of both discovering the SL UE and requesting another UE to perform sensing. After receiving the message, UE2 around UE1 may simultaneously reply to UE1 with a response of discovering the SL UE and transmit a response of performing sensing as another UE to the SF.

In S850, UE2 transmits a response message to UE1.

The response message may include the third information in the above embodiments.

After receiving the sensing request message transmitted from UE1, UE2 may determine that UE2 may perform the sensing task as another UE based on sensing capabilities of the UE2 itself and sensing requirement of the UE2 itself, and transmit the response message to UE1. The response message may include an indication that UE2 may perform the sensing task as another UE, and may further include sensing capability information of UE2, such as a supported sensing type, supported sensing quality capabilities, or the like.

In S860, UE1 transmits a sensing task request message to UE2.

The sensing task request message may include the fourth information in the above embodiments.

After receiving the response message from UE2, UE1 may select UE2 as another UE, and UE1 may transmit the sensing task request message to UE2. The sensing task request message may include ID information of the sensing task, ID information of the discovery request message (which is consistent with that transmitted from the SF), the sensing type, the quality requirement of sensing, or the like. The sensing task request message may further include the ID information of the SF, and optionally, the sensing task request message may further include ID information of UE1 itself.

In S870, UE2 establishes a connection with the SF.

After receiving the sensing task request message transmitted from UE1, UE2 may establish the connection with the SF via the ID information of the SF. Specifically, a session may be established via user plane address information of the SF, or signaling interaction is performed via control plane signaling based on the ID information of the SF.

In S880, UE2 reports sensing data to the SF.

UE2 may report the sensing data to the SF based on the ID information of the sensing task, the ID information of the discovery request message (which is consistent with that transmitted from the SF in S830 and the same as that transmitted from UE1 in S860), the ID information of UE1, or the like.

In the present disclosure, UE1 transmits the sensing request message to the UE around UE1, to obtain the sensing capability information of the UE, and select another UE, and then transmit ID information of the SF to the selected another UE, so as to enable another UE to communicate with the SF and report the sensing data.

Method 3: the first terminal device reports to the first network element that the second terminal device is capable of performing the first sensing task. The first network element selects the second terminal device as another UE performing the first sensing task and establishes a connection with the second terminal device. The method 3 is specifically described as follows.

Optionally, after receiving the first information, the second terminal device may transmit third information to the first terminal device.

Optionally, the third information may be used for indicating that the second terminal device is capable of performing the first sensing task. Optionally, the third information may include sensing capability information of the second terminal device.

Optionally, the first terminal device may transmit fifth information to the first network element based on the third information. Optionally, the fifth information may be used for indicating that the second terminal device is capable of performing the first sensing task.

Optionally, the fifth information may include one or more of: identifier information of the second terminal device, address information of the second terminal device, identifier information of the first sensing task, or identifier information of the sensing request.

Optionally, after selecting the second terminal device as another UE performing the first sensing task, the first network element may establish a connection with the second terminal device and interact with the second terminal device.

The specific implementation process of the method 3 is described below in conjunction with

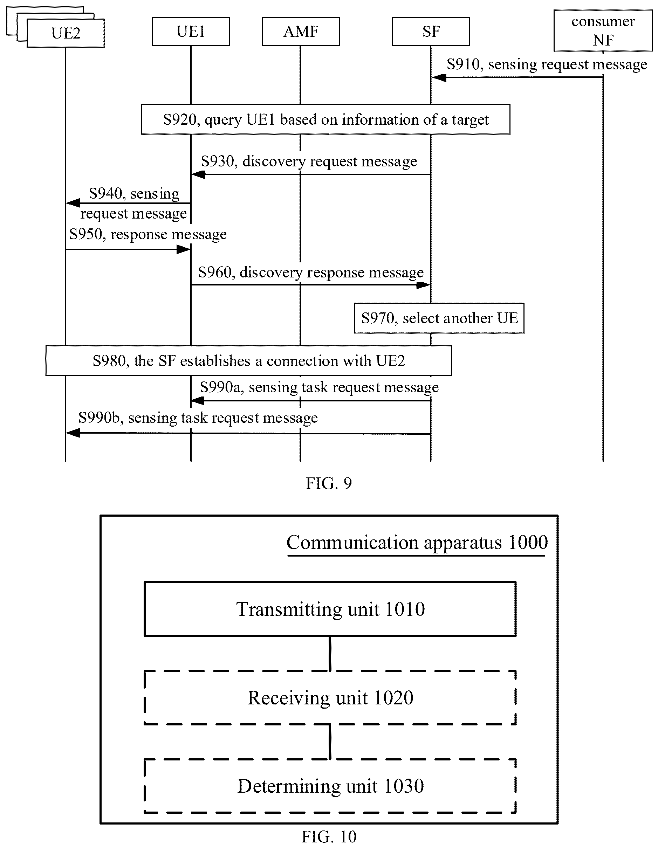

FIG. 9. In FIG. 9, after receiving a UE-level sensing request message and discovering UE1, the SF transmits a discovery request message to UE 1. UE1 may carry sensing manner information of a current sensing task in the sensing request message transmitted to UE2 around the UE1 itself. UE1 obtains UE information of UE2 and notifies the SF, and SF may make subsequent selection of another UE.

As illustrated in FIG. 9, the method 900 may include steps S910 to S990, which are specifically as follows.

In S910, a consumer NF transmits a sensing request message to the SF.

The consumer NF may be a core network element, such as the AMF, the NEF, or an application server, such as the AF, or the UE.

The sensing request message may include information of a target UE (e.g., ID information of the target UE), the sensing request message may further include a requested sensing manner and/or a requested sensing service type, and the sensing request message may further include quality information required for a sensing service, such as accuracy.

The information of the target UE may include one or more of:
a subscription permanent identifier (SUPI) of the target UE, subscription concealed identifier (SUCI) of the target UE, generic public subscription identifier (GPSI) of the target UE, or other information of the target UE; and
address information of the target UE (IP address, MAC address, or the like).

Optionally, the SF or other network elements (e.g., the NEF) may map the target UE information to convert the information of the target UE into ID information (e.g., the SUPI) that may be directly used for querying within the core network.

In S920, the SF queries UE1 based on the information of the target UE (UEl may be the first terminal device in the above embodiments).

Specifically, the SF may discover UE1 by querying other network elements, such as the AMF, the unified data repository (UDR), the UDM, or by querying local information.

In S930, the SF transmits a discovery request message to UE1.

The discovery request message may include the second information in the above embodiments.

The SF transmits the discovery request message to UE1 based on the sensing request message, which may include indication information for discovering the assistant UE. Optionally, the sensing request message may further include ID information of the sensing task/request, the sensing manner (such as a manner which UE A performs transmission and UE B performs reception, specifically, the sensing request message may further include an indication of the assistant UE as a transmitter or a receiver), the sensing type, the quality requirement of sensing, or the like, and may further include SF ID information (e.g., device ID information of the SF, instance information within the 5GC, address information of the SF).

The sensing type may include intrusion monitoring, target positioning, motion capture, speed/trajectory prediction, or the like, and the sensing type may also be specific request report channel processing information (position information, Doppler frequency shift information, point cloud information, or the like). The quality requirement of sensing may include information, such as sensing accuracy information, reporting frequency, and false alarm rate.

In S940, UE1 transmits a sensing request message to UE2.

The sensing request message may include the first information in the above embodiments.

For example, after receiving the discovery request message transmitted from the SF, the UE1 may transmit the sensing request message to UE2 around UE1 in an SL manner. The sensing request message may include ID information of the sensing task, ID information of the discovery request message (which is consistent with that transmitted from the SF), the sensing type, the quality requirement of sensing, or the like. The sensing request message may further include the ID information of the SF, and optionally, the sensing request message may further include ID information of UE1 itself.

Here, UE1 transmits the sensing request message to UE2 around UE1, and may reuse an announcement message or a solicitation message transmitted via the PC5 interface in the current SL, and add information carried by the sensing request message (e.g., the first information); UE1 may also first discover another SL UE via the model for model A discovery or the model for model B discovery, and then initiate a request to another discovered SL UE via the sensing request message; UE1 may also directly use a newly defined SL sensing request message to transmit the sensing request message, and the SL sensing request message may be different from the existing solicitation message, but may include meaning of both discovering the SL UE and requesting another UE to perform sensing. After receiving the message, UE2 around UE1 may simultaneously reply to UE1 with a response of discovering the SL UE and transmit a response of performing sensing as another UE to the SF.

In S950, UE2 transmits a response message to UE1.

The response message may include the third information in the above embodiments.

After receiving the sensing request message transmitted from UE1, UE2 may determine that UE2 may perform the sensing task as another UE based on sensing capabilities of the UE2 itself and sensing requirement of the UE2 itself, and transmit the response message to UE1. The response message may include an indication that UE2 may perform the sensing task as another UE, and may further include ID information of UE2 and/or address information of UE2, and sensing capability information of UE2 (e.g., a supported sensing type, supported sensing quality capabilities).

In S960, UE1 transmits a discovery response message to the SF.

The discovery response message may include the fifth information in the above embodiments.

The discovery response message may carry the ID information of UE2 and/or address information of UE2, and optionally, the discovery response message may further include the ID information of the sensing task, the ID information of the discovery request message (which is consistent with that transmitted from the SF), or the like.

In S970, the SF selects another UE.

The SF may obtain information of multiple selectable UEs (e.g., the ID information of UE2 and/or address information of UE2) based on the discovery response message reported by UE1, and select another UE.

In S980, the SF establishes a connection with UE2.

The SF may establish a connection of the user plane or the control plane with multiple selected UE2s based on the ID information of UE2 and/or address information of UE2.

In S990, the SF transmits a sensing task request message to UE1 and UE2.

In the solution, the sensing requirement and ID information of the SF are carried in the sensing request message transmitted from UE1 to UEs around the UE1, to enable the UEs around the UE1 know whether they may support the sensing task. After selecting another UE, UE1 reports the information of a selected another UE to the SF, and the SF triggers establishment of connection with another UE.

In conjunction with FIGS. 1 to 9, the method embodiments of the present disclosure are described in detail above, and the apparatus embodiments of the present disclosure will be described in detail below in conjunction with FIGS. 10 to 13. It should be understood that the description of the method embodiments and the description of the apparatus embodiments correspond to each other, and therefore, for parts that are not described in detail may refer to that of the previous method embodiments.

FIG. 10 is a schematic structural diagram of a communication apparatus provided in an embodiment of the present disclosure. As illustrated in FIG. 10, the apparatus 1000 includes a transmitting unit 1010, which is specifically as follows:
the transmitting unit 1010, configured to transmit first information to a second terminal device, where the first information is used for requesting the second terminal device to serve as another user equipment (UE) performing a first sensing task.

Optionally, the first information includes one or more of: identifier information of the first sensing task, identifier information of a sensing request, a sensing type, a quality requirement of sensing, or identifier information of a first network element.

Optionally, the apparatus 1000 further includes a receiving unit 1020, configured to: receive second information transmitted from a first network element, where the second information is used for indicating to the apparatus to discover another user equipment (UE) capable of performing the first sensing task.

Optionally, the second information includes one or more of: first indication information, identifier information of the first sensing task, identifier information of a sensing request, a sensing manner, a sensing type, a quality requirement of sensing, or identifier information of the first network element; where the first indication information indicates to the apparatus to discover the another UE used for performing the first sensing task.

Optionally, the apparatus 1000 further includes a receiving unit 1020, configured to receive third information transmitted from the second terminal device, where the third information is used for indicating that the second terminal device is capable of performing the first sensing task.

Optionally, the third information includes sensing capability information of the second terminal device.

Optionally, the apparatus 1000 further includes a determining unit 1030, configured to determine, based on the third information, that the second terminal device is capable of serving as the another UE performing the first sensing task.

Optionally, the transmitting unit 1010 is further configured to: transmit fourth information to the second terminal device, where the fourth information is used for requesting the second terminal device to perform the first sensing task.

Optionally, the fourth information includes one or more of: identifier information of the first sensing task, identifier information of a sensing request, a sensing type, a quality requirement of sensing, identifier information of a first network element, or identifier information of the apparatus.

Optionally, the transmitting unit 1010 is further configured to: transmit fifth information to a first network element based on the third information, where the fifth information is used for indicating that the second terminal device is capable of performing the first sensing task.

Optionally, the fifth information includes one or more of: identifier information of the second terminal device, address information of the second terminal device, identifier information of the first sensing task, or identifier information of a sensing request.

Optionally, the first network element is a network element used for a sensing service.

Optionally, the sensing type includes one or more of: intrusion monitoring, target positioning, motion capture, speed prediction, trajectory prediction, or reporting of channel processing information.

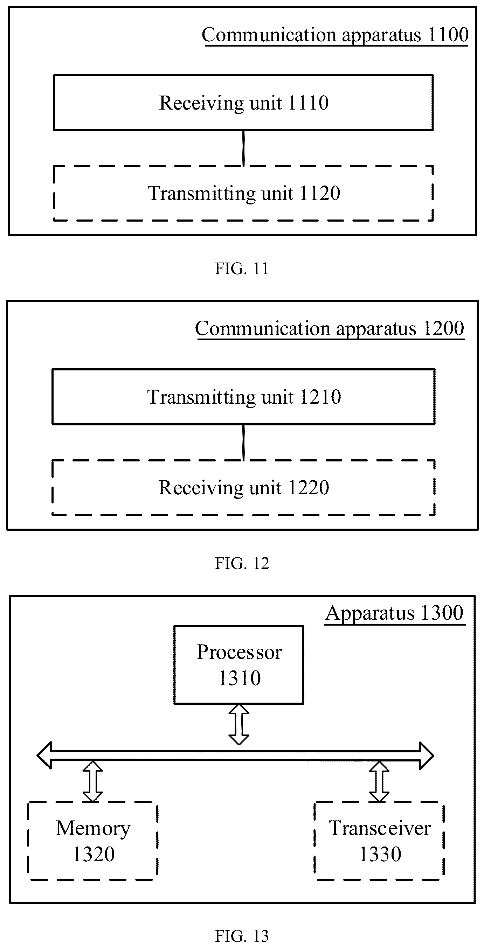

FIG. 11 is a schematic structural diagram of a communication apparatus provided in an embodiment of the present disclosure. The communication apparatus 1100 in FIG. 11 includes a receiving unit 1110, which is specifically as follows:
the receiving unit 1110, configured to receive first information transmitted from a first terminal device, where the first information is used for requesting the apparatus to serve as another user equipment (UE) performing a first sensing task.

Optionally, the first information includes one or more of: identifier information of the first sensing task, identifier information of a sensing request, a sensing type, a quality requirement of sensing, or identifier information of a first network element.

Optionally, the apparatus 1100 further includes a transmitting unit 1120, configured to: transmit sixth information to a first network element, where the sixth information is used for indicating that the apparatus is capable of performing the first sensing task.

Optionally, the sixth information includes one or more of: identifier information of the first sensing task, identifier information of a sensing request, or identifier information of the first terminal device.

Optionally, the apparatus 1100 further includes a transmitting unit 1120, configured to transmit third information to the first terminal device, where the third information is used for indicating that the apparatus is capable of performing the first sensing task.

Optionally, the third information includes sensing capability information of the apparatus.

Optionally, the receiving unit 1110 is further configured to: receive fourth information transmitted from the first terminal device, where the fourth information is used for requesting the apparatus to perform the first sensing task.

Optionally, the fourth information includes one or more of: identifier information of the first sensing task, identifier information of a sensing request, a sensing type, a quality requirement of sensing, identifier information of a first network element, or identifier information of the first terminal device.

Optionally, the first network element is a network element used for a sensing service.

Optionally, the sensing type includes one or more of: intrusion monitoring, target positioning, motion capture, speed prediction, trajectory prediction, or reporting of channel processing information.

FIG. 12 is a schematic structural diagram of a communication apparatus provided in an embodiment of the present disclosure. The communication apparatus 1200 in FIG. 12 includes a transmitting unit 1210, which is specifically as follows:
the transmitting unit 1210, configured to transmit second information to a first terminal device, where the second information is used for indicating to the first terminal device to discover another user equipment (UE) capable of performing the first sensing task.

Optionally, the second information includes one or more of: first indication information, identifier information of the first sensing task, identifier information of a sensing request, a sensing manner, a sensing type, a quality requirement of sensing, or identifier information of the apparatus; where the first indication information indicates to the first terminal device to discover another UE performing the first sensing task.

Optionally, the apparatus 1200 further includes a receiving unit 1220, configured to receive sixth information transmitted from the second terminal device, where the sixth information is used for indicating that the second terminal device is capable of performing the first sensing task.

Optionally, the sixth information includes one or more of: identifier information of the first sensing task, identifier information of a sensing request, or identifier information of the first terminal device.

Optionally, the apparatus 1200 further includes a receiving unit 1220, configured to: receive fifth information transmitted from the first terminal device, where the fifth information is used for indicating that the second terminal device is capable of performing the first sensing task.

Optionally, the fifth information includes one or more of: identifier information of the second terminal device, address information of the second terminal device, identifier information of the first sensing task, or identifier information of a sensing request.

Optionally, the apparatus is a network element for a sensing service.

Optionally, the sensing type includes one or more of: intrusion monitoring, target positioning, motion capture, speed prediction, trajectory prediction, or reporting of channel processing information.

FIG. 13 is a schematic structural diagram of an apparatus provided in an embodiment of the present disclosure. The dashed lines in FIG. 13 indicate that the units or the modules are optional. The apparatus 1300 may be used to implement the methods described in the above method embodiments. The apparatus 1300 may be a chip or a communication apparatus.

The apparatus 1300 may include one or more processors 1310. The processor 1310 may support the apparatus 1300 to implement the methods described in the above method embodiments. The processor 1310 may be a general purpose processor or a special purpose processor. For example, the processor may be a central processing unit (CPU). Alternatively, the processor may be another general purpose processor, a digital signal processor (DSP), an application specific integrated circuits (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The apparatus 1300 may further include one or more memories 1320. The memory 1320 has stored thereon a program, and the program may be performed by the processor 1310, to enable the processor 1310 to perform the methods described in the above method embodiments. The memory 1320 may be independent of the processor 1310 or may be integrated into the processor 1310.

The apparatus 1300 may further include a transceiver 1330. The processor 1310 may communicate with other devices or chips via the transceiver 1330. For example, the processor 1310 may transmit data and receive data with other devices or chips via the transceiver 1330.

The embodiments of the present disclosure further provide a computer-readable storage medium for storing a program. The computer-readable storage medium may be applied to the communication apparatus provided in the embodiments of the present disclosure, and the program enables a computer to perform the methods performed by the communication apparatus in various embodiments of the present disclosure.

The embodiments of the present disclosure further provide a computer program product. The computer program product includes a program. The computer program product may be applied to the communication apparatus provided in the embodiments of the present disclosure, and the program enables a computer to perform the methods performed by the communication apparatus in various embodiments of the present disclosure.

The embodiments of the present disclosure further provide a computer program. The computer program may be applied to the communication apparatus provided in the embodiments of the present disclosure, and the computer program enables a computer to perform the methods performed by the communication apparatus in various embodiments of the present disclosure.

It should be understood that in the embodiments of the present disclosure, "B corresponding to A" means that B is associated with A, and B may be determined according to A. However, it should also be understood that determining B according to A does not mean determining B only according to A, B may also be determined according to A and/or other information.

It should be understood that the term "and/or" is only a description of an association relationship of associated objects, and indicates that there may be three kinds of relationships. For example, "A and/or B" may represent three cases: A exists alone, both A and B exist, and B exists alone. In addition, the character "/" herein generally indicates that the associated objects before and after this character are in an "or" relationship.

It should be understood that in various embodiments of the present disclosure, the magnitude of the serial numbers of the above processes does not mean an execution order. The execution order of each process should be determined by its function and internal logic, and should not constitute any limitation on the implementation process of the embodiments of the present disclosure.

In several embodiments provided by the present disclosure, it should be understood that the disclosed system, apparatuses and methods may be implemented in other manners. For example, the device/apparatus embodiments described above are only schematic. For example, the division of the units is only division of logical functions, and there may be other division manners in the actual implementation, such as a plurality of units or components may be combined or integrated into another system, or some features may be ignored or not implemented. In addition, the mutual coupling or direct coupling or communication connection illustrated or discussed may be indirect coupling or communication connection through some interfaces, devices/apparatuses, or units, which may be in electrical, mechanical or other forms.

The units described as separation components may or may not be physically separated, and the components illustrated as units may or may not be physical units, that is, they may be located at one place, or may be distributed onto a plurality of network units. Some or all of the units may be selected according to actual requirements to implement the purpose of the solution of the embodiments.

In addition, various functional units in various embodiments of the present disclosure may be integrated into one processing unit, or various units may exist physically alone, or two or more units may be integrated into one unit.

In the above embodiments, all or part of the above embodiments may be implemented by software, hardware, firmware or any combination thereof. When implemented using software, all or part of the above embodiments may be implemented in a form of the computer program product. The computer program product includes one or more computer instructions. When the computer program instructions are loaded and executed on a computer, the process or the function described in the embodiments of the present disclosure is generated in all or part. The computer may be a general purpose computer, a special purpose computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center through wired manner (e.g., coaxial cable, optical fiber, or digital subscriber line (DSL)) or wireless manner (e.g., infrared, radio, or microwave). The computer-readable storage medium may be any available medium that is capable of being read by the computer or a data storage device (e.g., a server or a data center) that includes one or more available media. The available medium may be a magnetic medium (e.g., a floppy disk, a hard disk, or a magnetic tape), an optical medium (e.g., a digital video disc (DVD)), or a semiconductor medium (e.g., a solid state disk (SSD)).

The foregoing descriptions are merely specific implementations of the present disclosure, but the protection scope of the present disclosure is not limited thereto. Any skilled person in the art could readily conceive of changes or replacements within the technical scope of the present disclosure, which shall be all included in the protection scope of the present disclosure. Therefore, the protection scope of the present disclosure shall be subject to the protection scope of claims.

## Claims

1. A communication method, comprising:
transmitting, by a first terminal device, first information to a second terminal device, wherein the first information is used for requesting the second terminal device to serve as another user equipment (UE) performing a first sensing task.

2. The method according to claim 1, wherein the first information comprises one or more of:
identifier information of the first sensing task, identifier information of a sensing request, a sensing type, a quality requirement of sensing, or identifier information of a first network element.

3. The method according to claim 1 or 2, further comprising:
receiving, by the first terminal device, second information transmitted from a first network element, wherein the second information is used for indicating to the first terminal device to discover the another UE capable of performing the first sensing task.

4. The method according to claim 3, wherein the second information comprises one or more of:
first indication information, identifier information of the first sensing task, identifier information of a sensing request, a sensing manner, a sensing type, a quality requirement of sensing, or identifier information of the first network element;
wherein the first indication information indicates to the first terminal device to discover the another UE used for performing the first sensing task.

5. The method according to any one of claims 1 to 4, further comprising:
receiving, by the first terminal device, third information transmitted from the second terminal device, wherein the third information is used for indicating that the second terminal device is capable of performing the first sensing task.

6. The method according to claim 5, wherein the third information comprises sensing capability information of the second terminal device.

7. The method according to claim 5 or 6, further comprising:
determining, by the first terminal device based on the third information, that the second terminal device is capable of serving as the another UE performing the first sensing task.

8. The method according to claim 7, further comprising:
transmitting, by the first terminal device, fourth information to the second terminal device, wherein the fourth information is used for requesting the second terminal device to perform the first sensing task.

9. The method according to claim 8, wherein the fourth information comprises one or more of:
identifier information of the first sensing task, identifier information of a sensing request, a sensing type, a quality requirement of sensing, identifier information of a first network element, or identifier information of the first terminal device.

10. The method according to claim 5 or 6, further comprising:
transmitting, by the first terminal device, fifth information to a first network element based on the third information, wherein the fifth information is used for indicating that the second terminal device is capable of performing the first sensing task.

11. The method according to claim 10, wherein the fifth information comprises one or more of:
identifier information of the second terminal device, address information of the second terminal device, identifier information of the first sensing task, or identifier information of a sensing request.

12. The method according to any one of claims 2 to 11, wherein the first network element is a network element used for a sensing service.

13. The method according to any one of claims 2, 3 and 9, wherein the sensing type comprises one or more of:
intrusion monitoring, target positioning, motion capture, speed prediction, trajectory prediction, or reporting of channel processing information.

14. A communication method, comprising:
receiving, by a second terminal device, first information transmitted from a first terminal device, wherein the first information is used for requesting the second terminal device to serve as another user equipment (UE) performing a first sensing task.

15. The method according to claim 14, wherein the first information comprises one or more of:
identifier information of the first sensing task, identifier information of a sensing request, a sensing type, a quality requirement of sensing, or identifier information of a first network element.

16. The method according to claim 14 or 15, further comprising:
transmitting, by the second terminal device, sixth information to a first network element, wherein the sixth information is used for indicating that the second terminal device is capable of performing the first sensing task.

17. The method according to claim 16, wherein the sixth information comprises one or more of:
identifier information of the first sensing task, identifier information of a sensing request, and identifier information of the first terminal device.

18. The method according to claim 14 or 15, further comprising:
transmitting, by the second terminal device, third information to the first terminal device, wherein the third information is used for indicating that the second terminal device is capable of performing the first sensing task.

19. The method according to claim 18, wherein the third information comprises sensing capability information of the second terminal device.

20. The method according to claim 18 or 19, further comprising:
receiving, by the second terminal device, fourth information transmitted from the first terminal device, wherein the fourth information is used for requesting the second terminal device to perform the first sensing task.

21. The method according to claim 20, wherein the fourth information comprises one or more of:
identifier information of the first sensing task, identifier information of a sensing request, a sensing type, a quality requirement of sensing, identifier information of a first network element, and identifier information of the first terminal device.

22. The method according to any one of claims 15 to 21, wherein the first network element is a network element used for a sensing service.

23. The method according to claim 15 or 21, wherein the sensing type comprises one or more of:
intrusion monitoring, target positioning, motion capture, speed prediction, trajectory prediction, and reporting of channel processing information.

24. A communication method, comprising:
transmitting, by a first network element, second information to a first terminal device, wherein the second information is used for indicating to the first terminal device to discover another user equipment (UE) capable of performing the first sensing task.

25. The method according to claim 24, wherein the second information comprises one or more of:
first indication information, identifier information of the first sensing task, identifier information of a sensing request, a sensing manner, a sensing type, a quality requirement of sensing, and identifier information of a first network element;
wherein the first indication information indicates to the first terminal device to discover the another UE used for performing the first sensing task.

26. The method according to claim 24 or 25, further comprising:
receiving, by the first network element, sixth information transmitted from the second terminal device, wherein the sixth information is used for indicating that the second terminal device is capable of performing the first sensing task.

27. The method according to claim 26, wherein the sixth information comprises one or more of:
identifier information of the first sensing task, identifier information of a sensing request, and identifier information of the first terminal device.

28. The method according to claim 24 or 25, further comprising:
receiving, by the first network element, fifth information transmitted from the first terminal device, wherein the fifth information is used for indicating that the second terminal device is capable of performing the first sensing task.

29. The method according to claim 28, wherein the fifth information comprises one or more of:
identifier information of the second terminal device, address information of the second terminal device, identifier information of the first sensing task, and identifier information of a sensing request.

30. The method according to any one of claims 24 to 29, wherein the first network element is a network element F used for a sensing service.

31. The method according to claim 25, wherein the sensing type comprises one or more of:
intrusion monitoring, target positioning, motion capture, speed prediction, trajectory prediction, and reporting of channel processing information.

32. A communication apparatus, comprising:
a transmitting unit, configured to transmit first information to a second terminal device, wherein the first information is used for requesting the second terminal device to serve as another user equipment (UE) performing a first sensing task.

33. The apparatus according to claim 32, wherein the first information comprises one or more of:
identifier information of the first sensing task, identifier information of a sensing request, a sensing type, a quality requirement of sensing, and identifier information of a first network element.

34. The apparatus according to claim 32 or 33, further comprising: a receiving unit, configured to: receive second information transmitted from a first network element, wherein the second information is used for indicating to the apparatus to discover the another UE capable of performing the first sensing task.

35. The apparatus according to claim 34, wherein the second information comprises one or more of:
first indication information, identifier information of the first sensing task, identifier information of a sensing request, a sensing manner, a sensing type, a quality requirement of sensing, and identifier information of the first network element; wherein the first indication information indicates to the apparatus to discover the another UE used for performing the first sensing task.

36. The apparatus according to any one of claims 32 to 35, further comprising: a receiving unit, configured to: receive third information transmitted from the second terminal device, wherein the third information is used for indicating that the second terminal device is capable of performing the first sensing task.

37. The apparatus according to claim 36, wherein the third information comprises sensing capability information of the second terminal device.

38. The apparatus according to claim 36 or 37, further comprising: a determining unit, configured to: determine, based on the third information, that the second terminal device is capable of serving as the another UE performing the first sensing task.

39. The apparatus according to claim 38, wherein the transmitting unit is further configured to: transmit fourth information to the second terminal device, wherein the fourth information is used for requesting the second terminal device to perform the first sensing task.

40. The apparatus according to claim 39, wherein the fourth information comprises one or more of:
identifier information of the first sensing task, identifier information of a sensing request, a sensing type, a quality requirement of sensing, identifier information of a first network element, and identifier information of the apparatus.

41. The apparatus according to claim 36 or 37, wherein the transmitting unit is further configured to: transmit fifth information to a first network element based on the third information, wherein the fifth information is used for indicating that the second terminal device is capable of performing the first sensing task.

42. The apparatus according to claim 41, wherein the fifth information comprises one or more of:
identifier information of the second terminal device, address information of the second terminal device, identifier information of the first sensing task, and identifier information of a sensing request.

43. The apparatus according to any one of claims 33 to 42, wherein the first network element is a network element used for a sensing service.

44. The apparatus according to any one of claims 33, 34 and 40, wherein the sensing type comprises one or more of:
intrusion monitoring, target positioning, motion capture, speed prediction, trajectory prediction, and reporting of channel processing information.

45. A communication apparatus, comprising:
a receiving unit, configured to receive first information transmitted from a first terminal device, wherein the first information is used for requesting the apparatus to serve as another user equipment (UE) performing a first sensing task.

46. The apparatus according to claim 45, wherein the first information comprises one or more of:
identifier information of the first sensing task, identifier information of a sensing request, a sensing type, a quality requirement of sensing, and identifier information of a first network element.

47. The apparatus according to claim 45 or 46, further comprising: a transmitting unit, configured to: transmit sixth information to a first network element, wherein the sixth information is used for indicating that the apparatus is capable of performing the first sensing task.

48. The apparatus according to claim 47, wherein the sixth information comprises one or more of:
identifier information of the first sensing task, identifier information of a sensing request, and identifier information of the first terminal device.

49. The apparatus according to claim 45 or 46, further comprising: a transmitting unit, configured to: transmit third information to the first terminal device, wherein the third information is used for indicating that the apparatus is capable of performing the first sensing task.

50. The apparatus according to claim 49, wherein the third information comprises sensing capability information of the apparatus.

51. The apparatus according to claim 49 or 50, wherein the receiving unit is further configured to: receive fourth information transmitted from the first terminal device, wherein the fourth information is used for requesting the apparatus to perform the first sensing task.

52. The apparatus according to claim 51, wherein the fourth information comprises one or more of:
identifier information of the first sensing task, identifier information of a sensing request, a sensing type, a quality requirement of sensing, identifier information of a first network element, and identifier information of the first terminal device.

53. The apparatus according to any one of claims 46 to 52, wherein the first network element is a network element used for a sensing service.

54. The apparatus according to claim 46 or 52, wherein the sensing type comprises one or more of:
intrusion monitoring, target positioning, motion capture, speed prediction, trajectory prediction, and reporting of channel processing information.

55. A communication apparatus, comprising:
a transmitting unit, configured to transmit second information to a first terminal device, wherein the second information is used for indicating to the first terminal device to discover another user equipment (UE) capable of performing the first sensing task.

56. The apparatus according to claim 55, wherein the second information comprises one or more of:
first indication information, identifier information of the first sensing task, identifier information of a sensing request, a sensing manner, a sensing type, a quality requirement of sensing, and identifier information of the apparatus; wherein the first indication information indicates to the first terminal device to discover the another UE performing the first sensing task.

57. The apparatus according to claim 55 or 56, further comprising: a receiving unit, configured to: receive sixth information transmitted from the second terminal device, wherein the sixth information is used for indicating that the second terminal device is capable of performing the first sensing task.

58. The apparatus according to claim 57, wherein the sixth information comprises one or more of:
identifier information of the first sensing task, identifier information of a sensing request, and identifier information of the first terminal device.

59. The apparatus according to claim 55 or 56, further comprising: a receiving unit, configured to: receive fifth information transmitted from the first terminal device, wherein the fifth information is used for indicating that the second terminal device is capable of performing the first sensing task.

60. The apparatus according to claim 59, wherein the fifth information comprises one or more of:
identifier information of the second terminal device, address information of the second terminal device, identifier information of the first sensing task, and identifier information of a sensing request.

61. The apparatus according to any one of claims 55 to 60, wherein the apparatus is a network element used for a sensing service.

62. The apparatus according to claim 56, wherein the sensing type comprises one or more of:
intrusion monitoring, target positioning, motion capture, speed prediction, trajectory prediction, and reporting of channel processing information.

63. A communication apparatus, comprising a memory, a transceiver and a processor, wherein the memory is configured to store a program, the processor receives data and transmits data via the transceiver, and the processor is configured to call the program in the memory, to enable the communication apparatus to perform the method according to any one of claims 1 to 13.

64. A communication apparatus, comprising a memory, a transceiver and a processor, wherein the memory is configured to store a program, the processor receives data and transmits data via the transceiver, and the processor is configured to call the program in the memory, to enable the communication apparatus to perform the method according to any one of claims 14 to 23.

65. A communication apparatus, comprising a memory, a transceiver and a processor, wherein the memory is configured to store a program, the processor receives data and transmits data via the transceiver, and the processor is configured to call the program in the memory, to enable the communication apparatus to perform the method according to any one of claims 24 to 31.

66. A communication apparatus, comprising a processor, configured to call a program from a memory, to enable the communication apparatus to perform the method according to any one of claims 1 to 13.

67. A communication apparatus, comprising a processor, configured to call a program from a memory, to enable the communication apparatus to perform the method according to any one of claims 14 to 23.

68. A communication apparatus, comprising a processor, configured to call a program from a memory, to enable the communication apparatus to perform the method according to any one of claims 24 to 31.

69. A chip, comprising a processor, configured to call a program from a memory, to enable a device equipped with the chip to perform the method according to any one of claims 1 to 13.

70. A chip, comprising a processor, configured to call a program from a memory, to enable a device equipped with the chip to perform the method according to any one of claims 14 to 23.

71. A chip, comprising a processor, configured to call a program from a memory, to enable a device equipped with the chip to perform the method according to any one of claims 24 to 31.

72. A computer-readable storage medium, having stored thereon a program, wherein the program enables a computer to perform the method according to any one of claims 1 to 13.

73. A computer-readable storage medium, having stored thereon a program, wherein the program enables a computer to perform the method according to any one of claims 14 to 23.

74. A computer-readable storage medium, having stored thereon a program, wherein the program enables a computer to perform the method according to any one of claims 24 to 31.

75. A computer program product, comprising a program, wherein the program enables a computer to perform the method according to any one of claims 1 to 13.

76. A computer program product, comprising a program, wherein the program enables a computer to perform the method according to any one of claims 14 to 23.

77. A computer program product, comprising a program, wherein the program enables a computer to perform the method according to any one of claims 24 to 31.

78. A computer program, wherein the computer program enables a computer to perform the method according to any one of claims 1 to 13.

79. A computer program, wherein the computer program enables a computer to perform the method according to any one of claims 14 to 23.

80. A computer program, wherein the computer program enables a computer to perform the method according to any one of claims 24 to 31.
